Europäisches Patentamt

(19) European Patent Office

Office européen des brevets

(11) **EP 0 683 084 B1**

(12) **EUROPEAN PATENT SPECIFICATION**

(45) Date of publication and mention
of the grant of the patent:
**15.04.1998 Bulletin 1998/16**

(51) Int. Cl.⁶: **B62D 1/19**

(21) Application number: **94306998.9**

(22) Date of filing: **26.09.1994**

(54) **Energy absorbing intermediate shaft**

Energieabsorbierende Zwischenwelle

Arbre intermédiaire à absorption d'énergie

(84) Designated Contracting States:
**DE FR GB**

(30) Priority: **20.05.1994 JP 106672/94**

(43) Date of publication of application:
**22.11.1995 Bulletin 1995/47**

(73) Proprietor: **NSK LTD**
**Shinagawa-ku, Tokyo (JP)**

(72) Inventors:
• **Moriyama, Seiichi**
**Takasaki-shi, Gunma-ken (JP)**
• **Saito, Katsumi**
**Maebashi-shi, Gunma-ken (JP)**
• **Yamasaki, Daijiro**
**Maebashi-shi, Gunma-ken (JP)**

(74) Representative:
**Abbie, Andrew Kenneth et al**
**R.G.C. Jenkins & Co.**
**26 Caxton Street**
**London SW1H 0RJ (GB)**

(56) References cited:
EP-A- 0 422 992            DE-B- 2 212 713
GB-A- 2 269 140            US-A- 3 461 740

• PATENT ABSTRACTS OF JAPAN vol. 15, no. 244
(M-1127), 24 June 1991 & JP-A-03 079472
(SUZUKI), 4 April 1991,

## Description

The present invention relates to an energy absorbing intermediate shaft assembly for use in a steering system of an automobile in order to transmit the movement of a steering wheel to a steering gear.

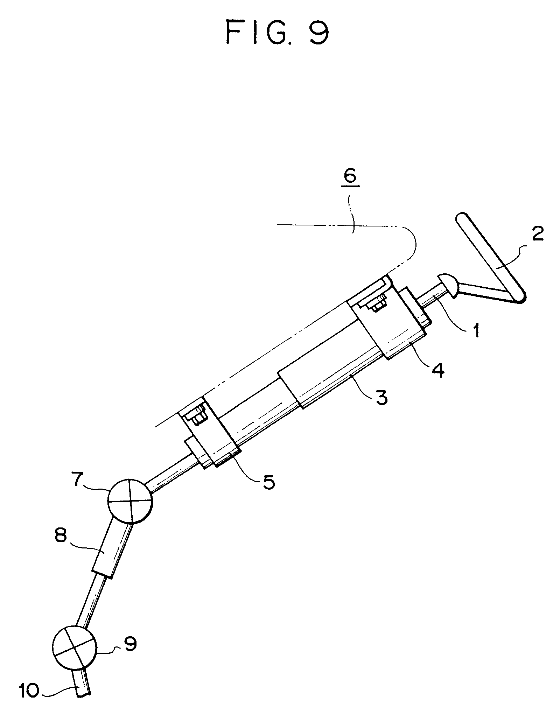

In order to transmit the movement of a steering wheel to a steering gear, a steering system for an automobile has constitution shown in Fig. 9. As shown in Fig. 9, a steering wheel 2 is fixed to the upper end of a steering shaft 1, and a steering column 3 is fixed under an instrument panel 6 with an upper bracket 4 and a lower bracket 5. Said steering shaft 1 is rotatably mounting within the steering column 3. The lower end of the steering shaft 1 which protrudes from the lower open end of the steering column is connected via a first universal joint 7 with the upper end of an intermediate shaft assembly 8. Further, the lower end of the intermediate shaft assembly 8 is connected via a second universal joint 9 with the input shaft 10 of a steering gear (not shown).

In the above-mentioned constitution, the rotation of the steering wheel 2 is transmitted through the steering shaft 1 inserted through the steering column 3, the first universal joint 7, the intermediate shaft assembly 8, the second universal joint 9, the input shaft 10, and finally, to the steering gear, thereby giving a steering angle to wheels.

Generally, in the steering system having the constitution described above, the steering column, 3, the steering shaft 1 and the intermediate shaft assembly 8 are of energy absorbing type which, when given a bump, absorb the energy of the bump and shorten their overall lengths in order to protect the driver at the time of a car crash. For example, Japanese Laid-Open Patent Appln. No. 3-79472 discloses one of the typical energy absorbing intermediate shaft assembly.

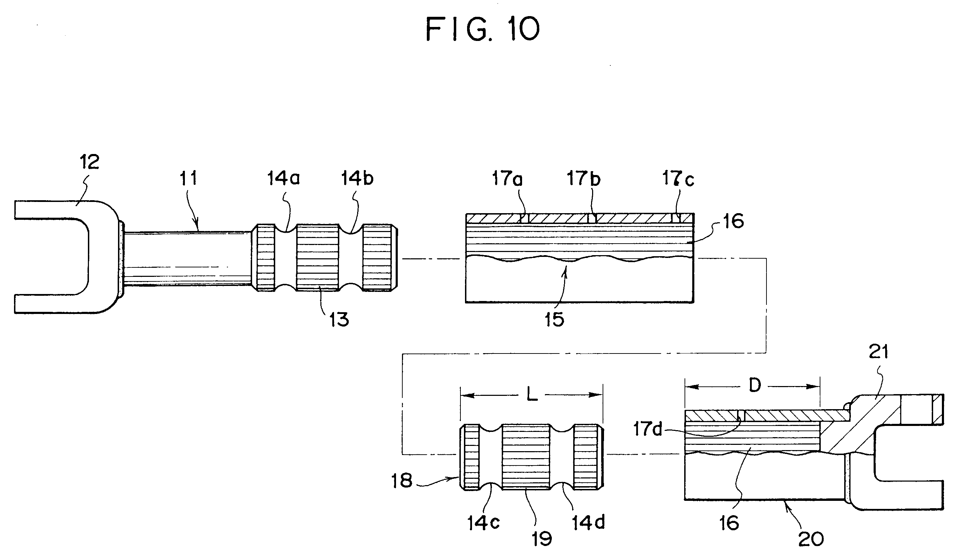

This typical energy absorbing intermediate shaft assembly disclosed the above Laid-Open Patent consists of an assembly of four components which are assembled together, as shown in Fig. 10. One end (the left end in Fig. 10) of a shaft 11 and a yoke 12 which constitutes a universal joint are welded together. On the periphery near the other end of the shaft 11, male splines 13 are formed. And two concave grooves 14a and 14b are formed around the periphery on which said male splines 13 are formed.

On the other hand, female splines 16 are formed on the inner periphery of a connection tube 15, which has three through holes 17a, 17b and 17c penetrating from the inner periphery to the outer periphery of the connecting tube 15. These through holes are separately aligned in the axial direction, wherein the distance between the through holes 17a and 17b is the same as the distance between the above-mentioned grooves 14a and 14b.

On the periphery of a connecting shaft 18, male splines 19 are formed. And two grooves 14c and 14d are formed around the periphery on which the male splines 19 are formed.

One end of a tube 20 is an open end, while the other end thereof and a yoke 21 which constitutes another universal joint are welded together. The tube 20 also has a through hole 17d penetrating from the inner periphery to the outer periphery of the tube 20. The distance between the through hole 17d and the above-mentioned through hole 17c when said connecting tube 15 contacts the tube 20 is the same as the distance between the grooves 14c and 14d formed around the periphery of the connecting shaft 18. Further the depth D from the open end of the tube 20 to the end face of the yoke 21 is the same as the length L of the connecting shaft 18 ($D = L$).

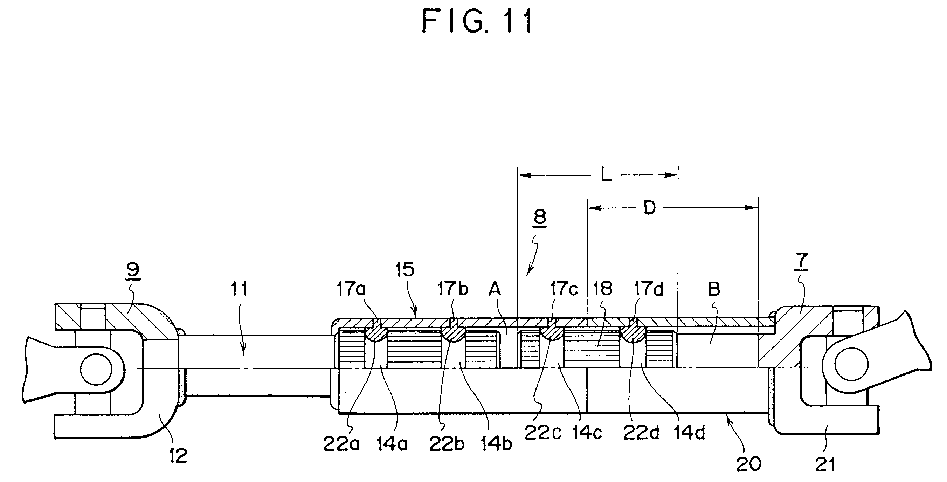

These components 11, 15, 18 and 20 formed as described above are assembled together as shown in Fig. 11, and are fixedly set to each other by injecting synthetic resin 22a - 22d through the through holes 17a - 17d into the grooves 14a and 14d and then curing the synthetic resin. As the synthetic resin 22a - 22d injected through respective through hole 17a - 17d fills the entire grooves 14a - 14d and cures therein, the components 11, 15, 18 and 20 are fixedly set to each other so that they can neither rotate around the axis nor shift in the axis direction. Note that a clearance A between the right end face of the shaft 11 and the left end face of the connecting shaft 18 and a clearance B between the right end face of the connecting shaft 18 and the end face of the yoke 21 are formed when the components 11, 15, 18 and 20 are assembled together as described above. The connecting shaft 18 which connects the connecting tube 15 with the tube 20 not only transmits torque between the tubes 15 and 20 but also prevents the contact position of the tubes 15 and 20 from bending.

When a car which has the intermediate shaft assembly 8 constructed as shown in Fig. 11 built in its steering system crashes and the front thereof is collapsed, the second adjustable joint 9 including said yoke 12 is pushed backwards (rightwards in Fig. 11), thereby giving large compressive force in the axial direction to the intermediate shaft 8. By this compressive force, first, the synthetic resin 22a and 22b bonding the shaft 11 and the connecting tube 15 is torn and broken. Then, the shaft 11 shifts backwards by the length of said clearance A and the right end face of the shaft 11 comes in contact with the left end face of the connecting shaft 18.

When the shaft 11 in the above state is further pushed backwards, the synthetic resin 22c and 22d bonding the connecting shaft 18 to the connecting tube 15 and the tube 20 is torn and broken. Then, the connecting tube 15 relatively shifts by the length of said clearance B and the right end face of the connecting shaft 18 and the end face of the yoke 21 come in contact with each other. In this state, the open end of the tube 20 and the left end face of the connecting shaft 18 come in the same plane, and bearing capacity of the connecting shaft 18 which connects the tube 20 with the connecting tube 15, (that is, which prevents the contact portion of the tubes 20 and 15 from bending) disappears.

As a result, the shaft 11 and the connecting shaft slip off and separate from each other. And after that, the shaft 11 does not push backwards the connecting shaft 18 nor the tube 20. Accordingly, even if the second universal joint 9 is further pushed backwards at the time of the car crash, the first universal joint 7 is not pushed backwards. Thus, as the steering wheel 2 does not protrude toward the driver, it can not hurt the driver.

As for the above-mentioned typical energy absorbing intermediate shaft, however, since the four separately prepared components 11, 15, 18 and 20 are first assembled together as predetermined positions and then are fixedly set to each other with synthetic resin 22a - 22d, such assembly operation is difficult and the manufacturing cost necessarily rises.

In addition, since two separately prepared shaft members, that is, the shaft 11 and the connecting shaft 18, constitute the shaft, at least three fixing points should be provided in order to fixedly connect the shafts 11 and 18 with the connecting tube 15 and the tube 20. And in order to provide said fixing points, the shafts 11 and 18 should have certain length of engagement with the tubes 15 and 20. In short, when more fixing force is required, the overall length of the intermediate shaft 8 becomes longer. In such a case, troubles arise. For example, it becomes difficult to arrange the intermediate shaft 8 between the first and second universal joints and obtain sufficient clearances for collapse inside the intermediate shaft 8.

An object of the present invention is to provide an energy absorbing intermediate shaft assembly which consists of less components and whose assembly operation is simplified. Thus, the manufacturing cost thereof can be reduced.

An energy absorbing intermediate shaft assembly according to the present invention comprises: a tube; a shaft which is inserted in the tube from the open end thereof and fixedly set thereto so as not to rotate inside the tube; a displacement restricting portion which is formed between said shaft and said tube so that the shaft and the tube can shift in the axial direction only when strong force in the axial direction is given; a stopper portion which is formed at the other end of said tube in order to restrict the amount of insertion of said shaft into the tube; a small-cross-section portion formed in an intermediate part of the shaft, which is not inserted in the tube; and a reinforcing member which is provided around the shaft so as to entirely cover said small-cross-section portion and which can slide in the axis direction,

wherein the length of the tube is determined so that when the end portion of the shaft contacts the stopper portion, the open end of the tube near the reinforcing member comes to a position which coincides with said small-cross-section portion, the reinforcing member having been shifted by the tube to a position wherein it does not entirely cover said small-cross-section portion.

The tube and the shaft may be engaged with each other with splines.

The displacement restricting portion may have been formed by injecting resin between said shaft and said tube and curing the resin.

In a preferred embodiment the small-cross-section portion has a circular cross-section, the diameter of the small-cross-section portion being 1/4 to 1/2 of that of the shaft and the length of the small-cross-section portion being twice as great as or greater than the diameter of the small-cross-section portion.

In another embodiment the small-cross-section portion has a crescent cross-section which is eccentric with respect to the center of the shaft.

The reinforcing member may be a cover tube having an end edge engageable with an end edge of the tube at the open end thereof. In this case one of said end edges may slant with respect to the longitudinal axis of the shaft.

In order that the invention may be well understood, two embodiments of the invention and some modifications, which are given by way of example only will now be described with reference to the accompanying drawings, in which:

Fig. 1 is a cross-sectional view showing an embodiment according to the present invention.

Fig. 2 is a cross-sectional view showing the same embodiment built into a steering system.

Fig. 3 is a cross-sectional view showing the first stage of the state of the intermediate shaft at the time of a car crash.

Fig. 4 is a cross-sectional view showing the second stage of the state of the same.

Fig. 5 is a cross-sectional view showing the last stage of the state of the same.

Figs. 6A and 6B show another example of the small-cross-section portion in the middle part of the shaft, wherein Fig. 6A is a side view and Fig. 6B is a cross-sectional view cut and seen as indicated by the arrows VIB in Fig. 6A.

Fig. 7 is a cross-sectional view of another example of the shape of the cover tube, which is shown in the second stage of the state as in Fig. 4.

Fig. 8 is a cross-sectional view showing the cover tube shown in Fig. 7 in the last stage of the state as in Fig. 5.

Fig. 9 is a side view showing an example of a steering system to which the energy absorbing intermediate shaft assembly according to the present invention is applied.

Fig. 10 is a partial cross-sectional view showing components of a typical intermediate shaft assembly before assembly.

Fig. 11 is a partial cross-sectional view showing the components shown in Fig. 10 after assembly.

Fig. 12 is a side view showing the longitudinal cross-section of the middle part of another embodiment according to the present invention, which is in the state corresponding to that of Fig. 2.

Fig. 13 is a side view showing the same in the state corresponding to that of Fig. 3.

Fig. 14 is a side view showing the same in the state corresponding to that of Fig. 4.

Fig. 15 is a side view showing the same in the state corresponding to that of Fig. 5.

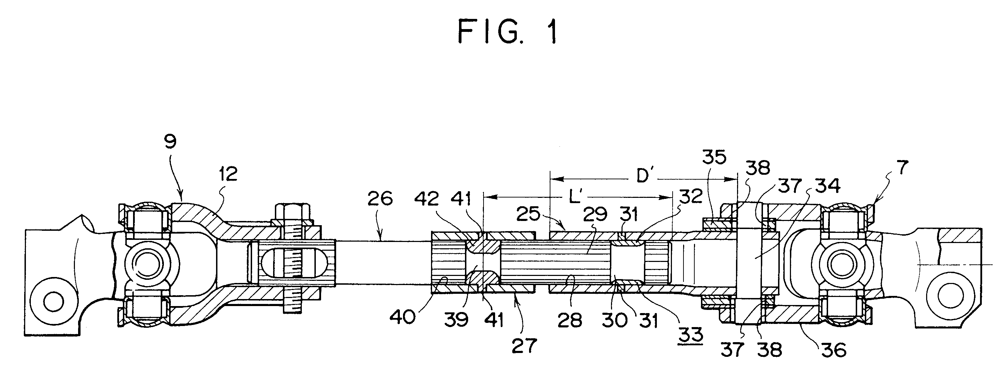

Figs. 1 to 5 show an embodiment according to the present invention. As shown in Fig. 1, the energy absorbing intermediate shaft assembly comprises a tube 25, a shaft 26 and a cover tube 27 serving as a reinforcing member. On the inner periphery near one end (left end in Fig. 1) of the tube 25, female splines 28 are formed. On the outer periphery near one end (right end in Fig. 1) of the shaft 26, male splines 29 are formed. And the shaft 26 is inserted into the tube 25 from said open end of the tube 25, when the female splines 28 and the male splines 29 are engaged with each other. A concave groove 30 is formed around the outer periphery near the right end of said shaft 26, while through holes 31 are formed in the middle portion of the tube 25 so as to correspond to the groove 30. A displacement restricting portion 33 is formed by injecting synthetic resin 32 via two through holes 31 into the groove 30. The displacement restricting portion 33 allows the shaft 26 to shift in the axial direction in the tube 25 only when strong force in the axial direction is given to said members 25 and 26. In the embodiment shown in the drawings, when the shaft 26 is pushed in the axial direction (rightwards in Fig. 1) into the tube 25 after stuffing the synthetic resin 32, the synthetic resin is torn and broken between the through holes 31 and the groove 30. Accordingly, the displacement restricting portion 33 restricts displacement between the tube 25 and the shaft 26 only by means of frictional force of the synthetic resin 32 acting between the inner periphery of the tube 25 and the outer periphery of the shaft 26. To the right end portion of the tube 25, a pin 34 is fixedly set, which serves as the stopper portion for restricting the amount of insertion of the shaft 26 into the tube 25. Both end of the pin 34 protrude from the outer periphery near the right end of the tube 25, and are loosely inserted through round holes 37 formed in a buffer tube 35 as well as round holes 38 formed in a yoke 36 which constitutes a first universal joint 7.

A small-cross-section portion 39 is formed in the intermediate part, which is not inserted in the tube 25, of the shaft 26. The diameter of the small-cross-section portion 39 is considerably smaller than that of the other part of the shaft 26. The above-mentioned male splines 29 are extended over both sides of the small-cross-section portion 39. The cover tube 27, which serves as a reinforcing member, is positioned so as to entirely cover the small-cross-section portion 39.

On the inner periphery of the cover tube 27, female splines 40 to be engaged with said male splines 29 are formed. Thus, when the cover tube 27 is supported around the shaft 26, the cover tube 27 can slide only in the axial direction. Further, through holes 41 through which the inner periphery and the outer periphery of the cover tube 27 communicate with each other are formed in the intermediate part of the cover tube 27. Synthetic resin 42 is injected into the clearance formed between the small-cross-section portion 39 and the cover tube 27 through these through holes 41.

Further, the depth D' from the open end of the tube 25 to the side of the pin 34 is determined to be equal to the Length L' from the right end of the shaft 26 to the middle of the small-cross-section portion 39 ($D' = L'$). Accordingly, when the right end of the shaft 26 contacts the side of the pin 34, the open end of the tube 25 and the middle of the small-cross-section portion 39 substantially coincide with each other, the cover tube 27 having been shifted by the tube 25 to a position in which it does not entirely cover portion 39.

In the above-mentioned constitution of the energy absorbing intermediate shaft assembly, a yoke 12 of a second universal joint 9 is fixedly set to the left end of the shaft 25, while the yoke 36 of a first universal joint 7 is supported via the buffer tube 35 around the right end of the tube 25. Incidentally, when torque is small, it is transmitted between the tube 25 and the yoke 12 through the buffer tube. But when the torque is large, it is transmitted by means of engagement of both ends of the pin 34 with the inner surfaces of respective round holes 38.

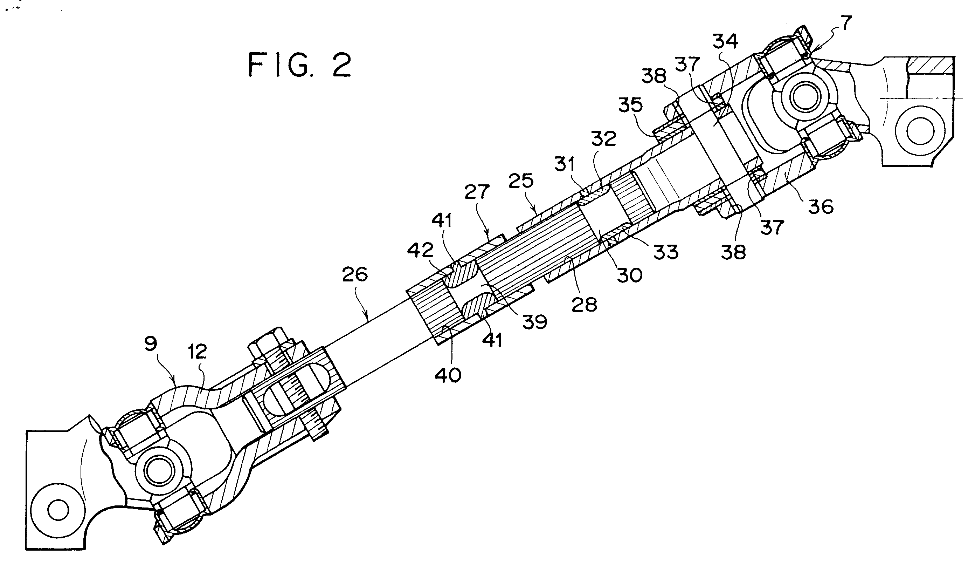

In use, the energy absorbing intermediate shaft assembly is positioned on the slant, as shown in Fig. 2, wherein one end thereof (the front end with respect to a car body) is connected via the second universal joint 9 with an input shaft 10 (see Fig. 9) of a steering gear and the other end (the rear end) is connected via the first universal joint 7 with a steering shaft 1 (Fig. 9). In this state, when the driver handles a steering wheel 2, the rotational motion of the steering shalt 1 is transmitted through the first adjustable joint 7 to the tube 25, and further through the shaft 26 to the second universal joint 9, which, in turn, rotates the input shaft 10 in order to give a desirable steering angle to front wheels.

During said operation of giving the steering angle, the shaft 26 receives torque. But, since the cover tube 27 is supported by the intermediate part of the shaft 26 in order to cover the small-cross-section portion 39, and since the female splines 40 on the inner periphery of the cover tube 27 are engaged with the male splines 29 on the outer periphery of the shaft 26, the small-cross-section portion 39 does not receive excessive stress nor is broken. In addition, since the synthetic resin 42 is stuffed around the small-cross-section portion 39 and further the cover tube 27 covers the synthetic resin 42, the shaft 26 does not bend at the small-cross-section portion 39 even if force which would otherwise bend the shaft 26 is given to the shaft 26.

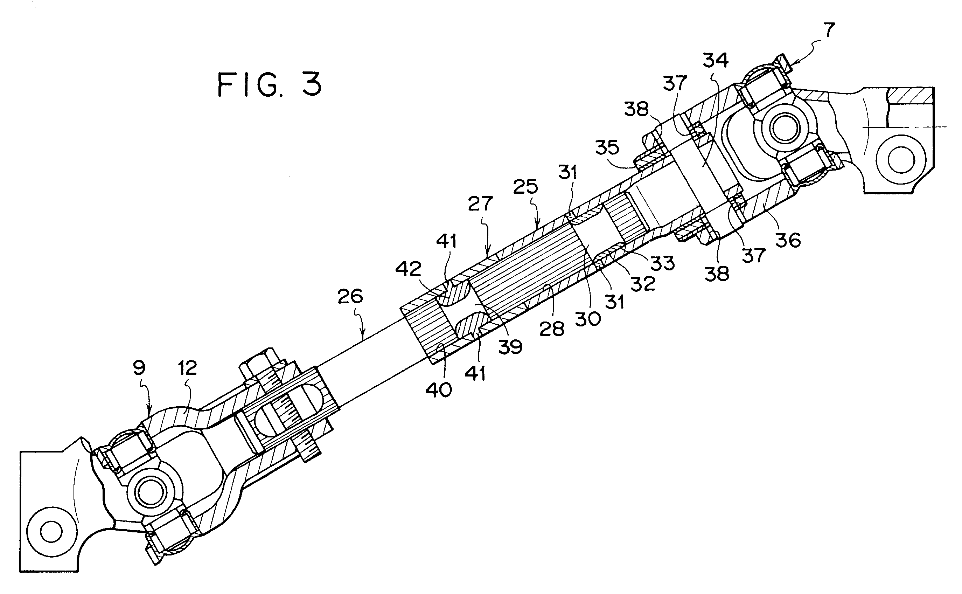

When the front of an automobile collapses at the time of the car crash, said second universal joint 9 is pushed backwards (rightwards in Fig. 2), that is, the energy absorbing intermediate shaft assembly receives strong compressive force in the axial direction. In this case, at first, the shaft 26 is further pushed into the tube 25 against frictional force given by the displacement restricting portion 33, as shown in Fig. 3. And the left end edge of the tube 25 and the right end edge of the cover tube 27, which have been separated from each other as shown in Figs. 1 and 2, come into contact with each other.

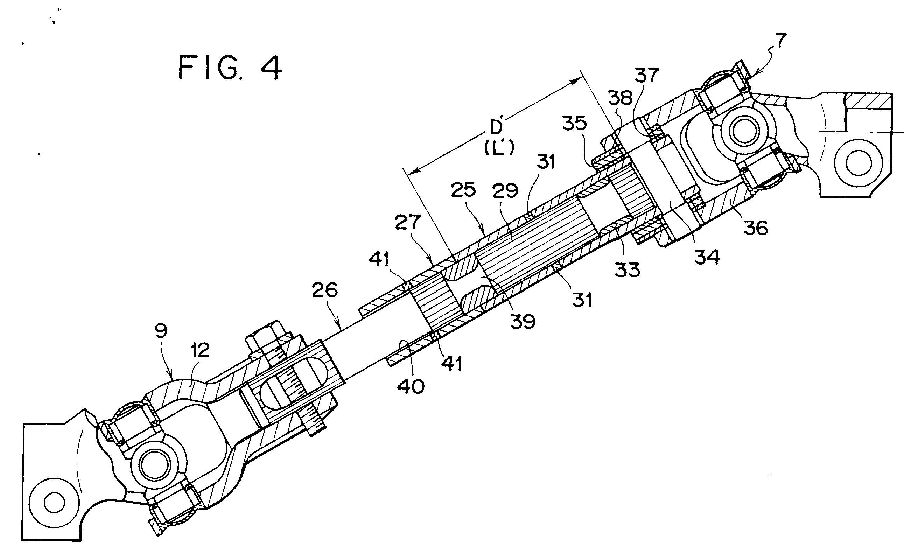

When the second universal joint 9 in said state is further pushed backwards, the synthetic resin 42 stuffed around the small-cross-section portion 39 is torn and broken against the inner edges of the through holes 41. And, as shown in Fig. 4, the shaft is pushed into the tube 25 until the right end of the shaft contacts the side of the pin 34. At the same time, the left end edge of the tube 25 pushes the cover tube 27 away from the small-cross-section portion 39 until the left end edge of the tube 25 and the small-cross-section portion 39 substantially coincide with each other.

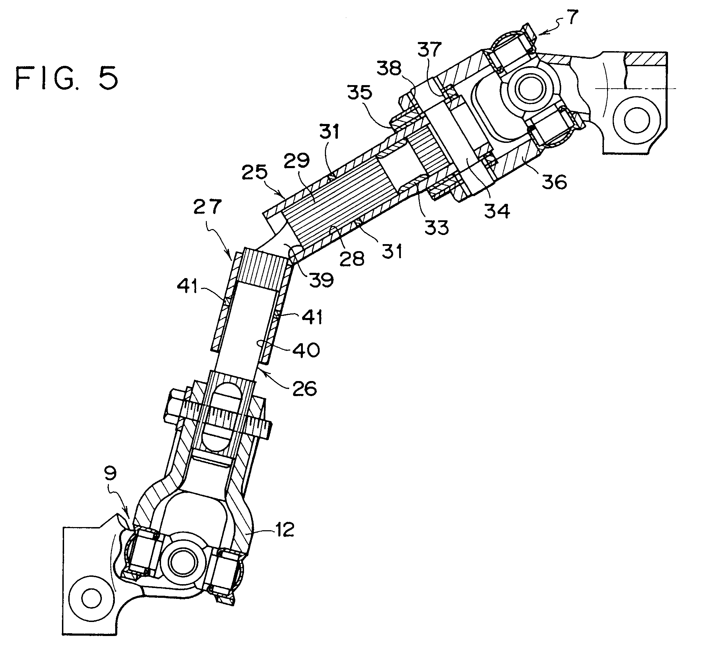

When the shaft 26 in the above state further receives the compressive force in the axial direction, the shaft 26 bends at the small-cross-section portion 39, as shown in Fig. 5, thereby preventing impact force given from the second universal joint 9 to the front end of the energy absorbing intermediate shaft from being transmitted to the first universal joint attached to the rear end of the intermediate shaft. Incidentally, the synthetic resin 42 stuffed around the small-cross-section portion 39 is smashed and falls down when the shaft 26 bends at the small-cross-section portion 39.

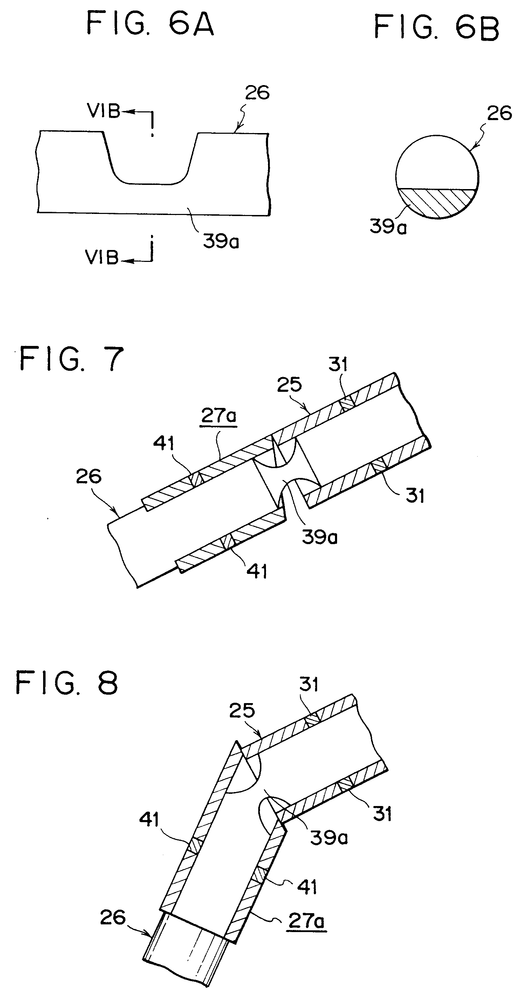

The shape of the small-cross-section portion 39 formed in the intermediate part of the shaft 26 is not limited to the constriction having a smaller diameter than the other part of the shaft as shown in Figs. 1 to 5. The small-cross-section portion can be formed so as to have a crescent cross section which is eccentric with respect to the center of the shaft 26, as shown in Figs. 6A and 6B. A small-cross-section portion 39a having such a shape can bend even with relatively small compressive force given to the shaft 26 when the reinforcing member (the cover tube 27) retreats from the small-cross-section portion 39a.

Otherwise, as shown in Figs. 7 and 8, for example, the right edge of a cover tube 27a is slantingly formed with respect to the longitudinal axis of the shaft (26) and the amount of displacement of the cover tube 27a toward the left end of the shaft 26 is properly restricted, the shaft 26 can bend even with relatively small compressive force given to the shaft 26 when the reinforcing member (the cover tube 27a) retreats from the small-cross-section portion 39. Instead of slanting the right edge of the cover tube 27a, the left edge of the tube 25 may be slantingly formed in order to obtain the similar effect. In addition, though not shown in the drawings, well known mechanisms for forbidding the shaft to rotate inside respective tubes can be employed instead of engagement with splines; for example, a flat portion formed in the shaft may be engaged with corresponding flat portions formed in the tubes to obtain the similar effect.

Incidentally, the cover tube 27 can be normally forbidden to move along the shaft 26 in the axial direction not only by means of the synthetic resin 42 shown in Figs. 1 to 4 but also by other mechanisms. For example, the shaft 26 may be forcedly pushed into the cover tube 27 with a very small interference between the tube and the outer periphery of the shaft 26; a pair of O-rings or a pair of C-shaped elastic metal rings may be set around the outer periphery of the shaft 26 so as to hold the cover tube 27 there-between; or steel ball(s) may be forcedly pushed into a groove (grooves) formed along the axial direction on either the inner periphery of the cover tube 27 or the outer periphery of the shaft 26.

As the energy absorbing intermediate shaft assembly of the above-mentioned constitution and operates as described above, it is possible to exhibit sufficient energy absorbing capacity, and at the same time, to reduce the number of components and simplify the assembly operation in order to reduce the manufacturing cost.

With the energy absorbing intermediate shaft assembly of the above-mentioned embodiment, the torque generated by steering operation is transmitted from the rear part (from the right in Fig. 1) of the shaft 26 to the front part (to the left in Fig. 1) of the same via the cover tube 27. While, the clearances between the female splines 40 on the inner periphery of a tube 25 and the male splines 29 on the outer periphery of the shaft 26 can not be avoided on account of the accuracy of machining employed. Therefore, the torque of steering operation may rotate the shaft 26 in a small angle in the cover tube 27 because of said clearances. In this case, said torque rotating the shaft 26 in the small angle is not transmitted through the cover tube 27 but through the small-cross-section portion 39 of the shaft 26 surrounded by the cover tube 27.

As the rigidity of the small-cross-section portion 39 is small, the portion 39 is twisted and elastically deformed when torque is transmitted. When the amount of elastic deformation caused by torque is large and the small-cross-section portion 39 is repeatedly twisted, damage such as cracks may occur because of metal fatigue of the small-cross-section portion 39. If the clearances between the female splines 40 and the male splines 29, that is, the amount of said elastic deformation were decreased, the above-mentioned damage could be avoided. But, as the male splines 29 must smoothly slide in the female splines 40 at the time of the car crash, the clearances should be decreased with high dimensional accuracy, which undesirably raises the manufacturing cost of the energy absorbing intermediate shaft.

Another embodiment was devised in order to solve the above-mentioned problem. The energy absorbing intermediate shaft assembly of this embodiment is the same as that of the above-mentioned embodiment in that it comprises: a tube; a shaft which is inserted in the tube from the open end thereof and fixedly set thereto so as not to rotate inside the tube; a displacement restricting portion which is formed between said shaft and said tube so that the shaft and the tube can shift in the axial direction only when strong force in the axial direction is given; a stopper portion which is formed at the other end of said tube in order to restrict the amount of insertion of said shaft into the tube; a small-cross-section portion having a circular cross-section formed in the intermediate part, which is not inserted in the tube, of the shaft; and a reinforcing member which is provided around the shaft so as to entirely cover said small-cross-section portion and which can slide only in the axial direction. The length of the tube of this embodiment is also determined so that the open end of the tube comes to the position which coincides with said small-cross-section portion when the end portion of the shaft bumps against said stopper portion.

The energy absorbing intermediate shaft assembly of this embodiment is, however, characterized in that the diameter of said small-cross-section portion is determined to be 1/4 to 1/2 of that of said shaft and that the length of the small-cross-section portion is determined to be twice as great as or greater than the diameter of the same.

Like the energy absorbing intermediate shaft assembly of the embodiment described before, the reinforcing member of this embodiment normally covering the small-cross-section portion in the middle part of the shaft prevents the shaft from bending at the small-cross-section portion. When strong compressive force in the axial direction is given at the time of the car crash, however, the shaft is pushed into the tube against restrictive force of the displacement restricting portion until the end portion of the shaft comes into contact with the stopper portion. At the same time, the edge of the open end of the tube pushes the reinforcing member away from the small-cross-section portion until the open end of the tube coincides with the small-cross-section portion. In said state, if further compressive force is given, the shaft bends at its small-cross-section portion so as to prevent impact force given through the front end of the energy absorbing shaft from being transmitted toward the rear end of the intermediate shaft assembly.

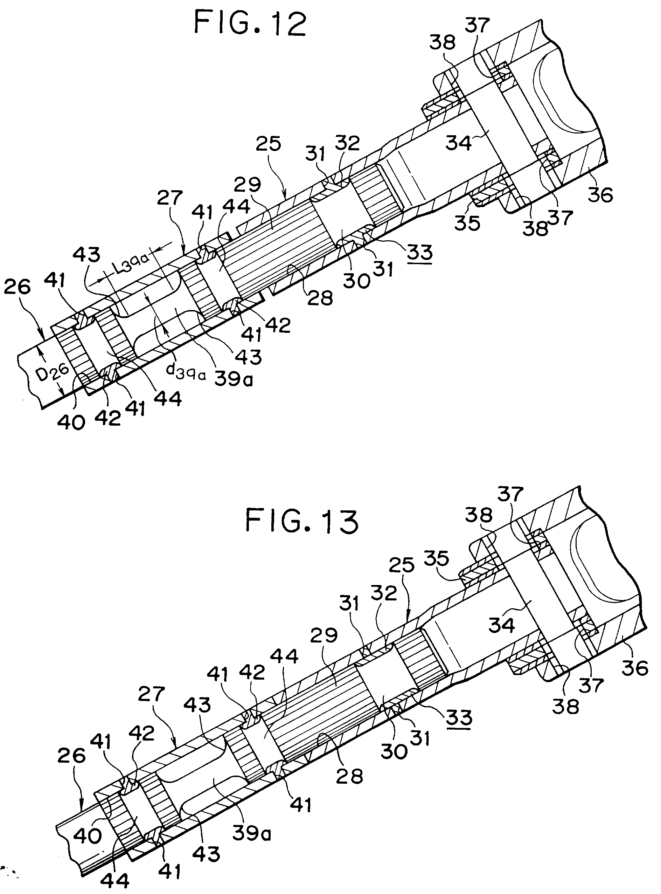

Especially in the case of the energy absorbing intermediate shaft assembly of the present embodiment, the small-cross-section portion formed as described above does not suffer from excessive force even when the shaft is rotated in a small angle inside the reinforcing member. More specifically, as the diameter of the small-cross-section portion is determined to be 1/4 to 1/2 of that of the shaft and the length of the small-cross-section portion is determined to be twice as great as or greater than the diameter of the same, only small stress is generated in the small-cross-section portion when the torque elastically deforms the small-cross-section portion. As a result even when torque is repeatedly given, the occurrence of damage of the small-cross-section portion caused by metal fatigue can be reduced. Therefore, the portions of the reinforcing member and those of the shaft which function as a rotation inhibiting mechanism do not have to be machined with high dimensional accuracy, which reduces the manufacturing cost of the energy absorbing intermediate shaft. Now, this second embodiment will be described with reference to Figs. 12 to 15. As described above, this embodiment is characterized in that a part of the energy absorbing intermediate shaft assembly, that is, the small-cross-section portion of the shaft 26 is modified from that of the above-mentioned embodiment. The dimensions of the small-cross-section portion 39a is determined so that metal fatigue is not accumulated in the small-cross-section portion 39a after the long-term use. Many of the other parts having structures and functions similar to those of the embodiment described before are indicated by the same reference numerals, and detailed description thereof will be omitted. In the following, the parts and portions characteristics of this embodiment will be mainly described.

In the middle part of the shaft 26 in the energy absorbing intermediate shaft of the present embodiment, the small-cross-section portion 39a having a diameter smaller than that of the other parts of the shaft 26 is formed concentrically with respect to the shaft 26. That is, the small-cross-section portion 39a is cylindrical and its axis coincides with that of the shaft 26. The ends of the small-cross-section portion 39a are linked with the main body portions of the shaft 26 via arcuate portions 43. As shown in the drawings, two grooves 44 are formed on both sides of the small-cross-section portion 39a around the periphery of the middle part of the shaft 26. Also, through holes 41 are formed in the cover tube 27 so as to correspond to respective grooves 44. Synthetic resin 42 is injected into the through holes 41 and the grooves 44, and then cured inside them to fix the through holes 41 to the grooves 44.

The shaft 26 has the small-cross-section portion 39a of the diameter $d_{39a}$ which satisfies $(d_{39a} = (1/4 - 1/2) D_{26})$, wherein $D_{26}$ is the diameter of the shaft 26. Note that the diameter $d_{39a}$ of the small-cross-section portion 39a is defined as the outer diameter of the cylindrical middle part of the same. Further, the length $L_{39a}$ of the small-cross-section portion 39a is determined to be twice as great as or greater than the diameter of the same ($L_{39a} \geq 2d_{39a}$). Note that the length $L_{39a}$ of the small-cross-section portion 39a is defined as the length of said cylindrical middle part to which the arcuate portions 43 are not included.

The energy absorbing intermediate shaft assembly of this embodiment is built in the steering system of an automobile as shown in Fig. 12. Normally the cover tube 27 serving as the reinforcing member covering the entire small-cross-section portion 39a is fixed around the small-cross-section portion 39a by the synthetic resin 42 so that the shaft does not bend at its small-cross-section portion 39a. The torque for steering is transmitted from the rear part (from the right in Fig. 12) of the shaft 26 to the front part (to the left in Fig. 12) of the same mainly through the cover tube 27.

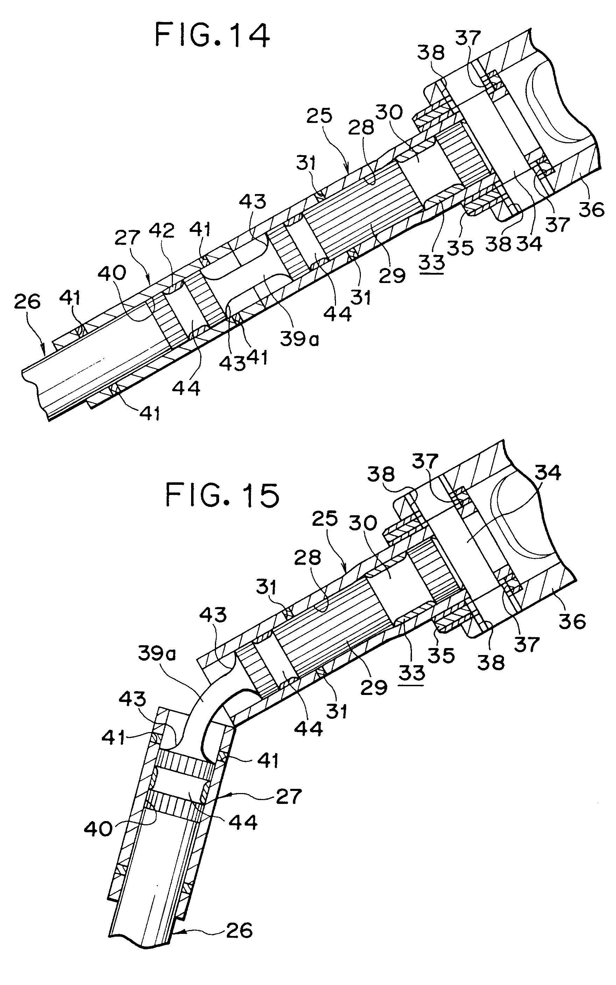

When strong compressive force in the axial direction is given at the time of car crash, the synthetic resin 42 releases the cover tube 27 from the shaft 26. Then, like the embodiment described before, the energy absorbing intermediate shaft assembly of the present embodiment shown in Fig. 12 goes into the state shown in Fig. 13, and further, into the state shown in Fig. 14, where the contact plane of the tube 25 and the cover tube 27 exists around the middle part of the small-cross-section portion 39a. As a result, the energy absorbing intermediate shaft assembly bends as the small-cross-section portion 39a is plastically deformed as shown in Fig. 15. The small-cross-section portion 39a plastically deformed absorbs the energy of the car crash and buffers the impact force given to the driver's body. The mechanism of buffering the impact force is the same as that of the embodiment described before. Note that the states of the energy absorbing intermediate shaft assembly of the present embodiment shown in Figs. 12, 13, 14 and 15 correspond to those of the already mentioned embodiment shown in Figs. 2, 3, 4 and 5, respectively.

As the energy absorbing intermediate shaft assembly of the present embodiment has the small-cross-section portion whose dimensions are determined as described, the small-cross-section portion 39a does not suffer from excessive force even when the shaft 26 is rotated in the small angle inside the cover tube serving as the reinforcing member. More specifically, the diameter $d_{39a}$ of the small-cross-section 39a is determined to be 1/4 to 1/2 of the diameter $D_{26}$ of the shaft 26, while the length $L_{39a}$ of the small-cross-section porion 39a is determined to be twice as great as or greater than the diameter $d_{39a}$ of the same. As a result, the torsional tolerance angle of the small-cross-section portion 39a, or the angle within which the small-cross-section portion 39a can be twisted between its both ends without being broken is increased.

As the torsional tolerance angle is increased, only small stress is generated in the small-cross-section portion 39a when the torque elastically deforms the small-cross-section portion 39a. So, even when torque is repeatedly given, the occurrence of damage of the small-cross-section portion 39a caused by metal fatigue can be reduced. Accordingly, the portions of the cover tube 27 serving as the reinforcing member and those of the shaft 26, that is, the male splines 29 and the female splines 40 do not have to be machined with high dimensional accuracy. As a result, the cost needed for machining with high accuracy can be saved and the manufacturing cost of the energy absorbing intermediate shaft assembly can be reduced.

Now, the experiment on the dimensional conditions of the small-cross-section portion 39a carried out by the inventors will be described. Shafts 26 having small-cross-section portion 39 (see Fig. 2) in the middle parts and those having small-cross-section portion 39a (see Fig. 12) in the middle parts were prepared. Each shaft 26 was given torque of ± 3kgf·m between its ends. The directions of the torque were switched alternately until cracking occurred in the small-cross-section portion 39/39a. Thus, the number of switching operations to give torque which caused cracking) was recorded. Conditions of the experiments:

material of the shaft 26 was S35C (JIS G 4051 carbon steel for machine structural use);
diameter $D_{26}$ of the shaft 26 was 14.7 mm; and
clearances between the shaft 26 and the cover tube 27 (tolerable displacement angle of components 26 and 27) was ± 0°30'.

The results of the experiments are as shown in the Table below.

Table 1

| Experiment No. | $d_{39a}$ | $L_{39a}$ | Number of alternate torsion test |
|---|---|---|---|
| 1 | $D_{26}/2.5$ | $d_{39a}$ | 100,000 |
| 2 | $D_{26}/2$ | $0.75d_{39a}$ | 100,000 |
| 3 | $D_{26}/2.5$ | $2d_{39a}$ | more than 1,000,000 |
| 4 | $D_{26}/3$ | $2.5d_{39a}$ | more than 1,000,000 |
| 5 | $D_{26}/3.5$ | $3d_{39a}$ | more than 1,000,000 |

As is clearly shown in the table, when the diameter $d_{39a}$ and the length $L_{39a}$ of the small-cross-section portion 39a are determined as described before sufficient durability of the small-cross-section portion 39a is obtained. Note that the maximum length of $L_{39a}$ is not only determined from the viewpoint of the durability of the small-cross-section portion 39a but also restricted according to other conditions such as the facility of manufacturing the cover tube 27, the ability to absorb the impact energy at the time of the bending of the shaft, and so on. In other words, the maximum length varies according to the type, the size, and so on of the car which the energy absorbing intermediate shaft assembly is built in. If the length $L_{39a}$ becomes five or six times as long as the diameter of the small-cross-section portion 39a or even longer, it may not be practically used with respect to the cost, the ability to absorbing impact energy, and so on. On the other hand, the longer the length $L_{39a}$ is determined, the better the durability becomes.

According to the present embodiment, the small-cross-section portion should have the cylindrical part. The shapes and the construction of other portions and parts may be, however, modified as those of the embodiment described before.

As the energy absorbing intermediate shaft assembly of the present embodiment has the construction and the functions described above, the same effects as those of the energy absorbing intermediate shaft assembly of the embodiment described before can be obtained. That is, the sufficient ability to absorb impact energy can be realized while the intermediate shaft consists of less components, which facilitates the assembly operations and reduces the manufacturing cost. In addition, the rotation inhibiting mechanism of the reinforcing member and the shaft does not have to be machined with high dimensional accuracy, which realizes the manufacturing cost lower than that of the embodiment described before.

## Claims

1. An energy absorbing intermediate shaft assembly comprising: a tube (25); a shaft (26) which is inserted in the tube from the open end thereof and fixedly set thereto so as not to rotate inside the tube; a displacement restricting portion (33) which is formed between said shaft and said tube so that the shaft and the tube can shift in the axial direction only when strong force in the axial direction is given; a stopper portion (34) which is formed at the other end of said tube in order to restrict the amount of insertion of said shaft into the tube; a small-cross-section portion (39) formed in an intermediate part of the shaft, which is not inserted in the tube; and a reinforcing member (27; 27a) which is provided around the shaft so as to entirely cover said small-cross-section portion and which can slide in the axis direction,

    wherein the length (D') of the tube (25) is determined so that when the end portion of the shaft (26) contacts the stopper portion (34), the open end of the tube near the reinforcing member (27, 27a) comes to a position which coincides with said small-cross-section portion (39, 39a), the reinforcing member (27, 27a) having been shifted by the tube (25) to a position wherein it does not entirely cover said small-cross-section portion (39, 39a).

2. An assembly according to claim 1, wherein said tube (25) and said shaft (26) are engaged with each other with splines (28, 29).

3. An assembly according to claim 1 or 2, wherein said displacement restricting portion has been formed by injecting resin (42) between said shaft (26) and said tube (25) and curing the resin.

4. An assembly according to claim 1, 2 or 3, wherein said small-cross-section portion (39) has a circular cross-section, the diameter of the small-cross-section portion being 1/4 to 1/2 of that of the shaft and the length of the small-cross-section portion being twice as great as or greater than the diameter of the small-cross-section portion.

5. An assembly according to claim 1, 2 or 3, wherein said small-cross-section portion (39a) has a crescent cross-section which is eccentric with respect to the center of the shaft.

6. An assembly according to claims 1, 2 or 3 wherein the reinforcing member is a cover tube (27, 27a) having an end edge engageable with an end edge of the tube (25) at the open end thereof.

7. An assembly according to claim 6, wherein one of said end edges slants with respect to the longitudinal axis of the shaft (26).

## Patentansprüche

1. Energieabsorbierende Zwischenwellenanordnung mit: einem Rohr (25); einer Welle (26), die in das Rohr von dem offenen Ende desselben eingesetzt ist und feststehend darin eingesetzt ist, so daß sie sich nicht innerhalb des Rohrs dreht; einem Verschiebungsbegrenzungsbereich (33), der zwischen der Welle und dem Rohr so ausgebildet ist, daß die Welle und das Rohr sich in der Axialrichtung nur verschieben können, wenn eine starke Kraft in der Axialrichtung übertragen wird; einem Anschlagbereich (34), welcher an dem anderen Ende des Rohrs ausgebildet ist, um das Maß des Einsetzens der Welle in das Rohr zu begrenzen; einem Bereich (39) mit kleinem Querschnitt, der in einem Zwischenteil der Welle ausgebildet ist, welcher nicht in das Rohr eingesetzt ist; und einem Verstärkungselement (27; 27a), das um die Welle herum so vorgesehen ist, daß es vollständig den Bereich mit kleinem Querschnitt umhüllt und welcher in der Achsenrichtung gleiten kann,

    wobei die Länge (D') des Rohrs (25) so festgelegt ist, daß, wenn der Endbereich der Welle (26) den Anschlagbereich (34) kontaktiert, das offene Ende des Rohrs nahe dem Verstärkungselement (27, 27a) in eine Position kommt, welche mit dem Bereich (39, 39a) mit kleinem Querschnitt übereinstimmt, wobei das Verstärkungselement (27, 27a) durch das Rohr (25) in eine Position verschoben wurde, bei der es nicht vollständig den Bereich (39, 39a) mit kleinem Querschnitt umhüllt.

2. Anordnung nach Anspruch 1, wobei das Rohr (25) und die Welle (26) miteinander mit einer Keilverbindung (28, 29) in Eingriff sind.

3. Anordnung nach Anspruch 1 oder 2, wobei der Verschiebungsbegrenzungsbereich durch Einspritzen von Harz (42) zwischen die Welle (26) und das Rohr (25) und Aushärten des Harzes ausgebildet wurde.

4. Anordnung nach einem der Ansprüche 1, 2 oder 3, wobei der Bereich (39) mit kleinem Querschnitt einen kreisförmigen Querschnitt hat, der Durchmesser des Bereiches mit keinem Querschnitt 1/4 bis 1/2 des Durchmessers der Welle ist und die Länge des Bereiches mit kleinem Durchmesser doppelt so groß oder größer als der Durchmesser des Bereiches mit kleinem Querschnitt ist.

5. Anordnung nach Anspruch 1, 2 oder 3, wobei der Bereich (39a) mit kleinem Querschnitt einen sichelförmigen Querschnitt hat, der bezüglich zur Mitte der Welle exzentrisch ist.

6. Anordnung entsprechend den Ansprüchen 1, 2 oder 3, wobei das Verstärkungselement ein Umhüllungsrohr (27, 27a) ist, das eine Endkante aufweist, die mit einer Endkante des Rohrs (25) an dem offenen Ende desselben in Eingriff bringbar ist.

7. Anordnung nach Anspruch 6, wobei eine der Endkanten bezüglich zur Längsachse der Welle (26) geneigt ist.

**Revendications**

1. Ensemble formant arbre intermédiaire à absorption d'énergie comprenant : un tube (25); un arbre (26), qui est inséré dans le tube à partir de l'extrémité ouverte de ce dernier et y est monté de façon fixe, de sorte qu'il ne peut pas tourner à l'intérieur du tube; une partie (33) de limitation de déplacement, qui est formée entre ledit arbre et ledit tube de sorte que l'arbre et le tube peuvent se déplacer dans la direction axiale uniquement lorsqu'une force intense est appliquée dans la direction axiale; une partie formant dispositif d'arrêt (34), qui est formée sur l'autre extrémité dudit tube de manière à limiter la distance d'insertion dudit arbre dans le tube; une partie (39) ayant une petite section transversale, formée dans une partie intermédiaire de l'arbre, qui n'est pas insérée dans le tube; et un élément de renfort (27;27a) qui est disposé autour de l'arbre de manière à recouvrir entièrement ladite partie ayant une petite section transversale et qui peut glisser dans la direction de l'axe,

dans lequel la longueur (D') du tube (25) est déterminée de telle sorte que, lorsque la partie d'extrémité de l'arbre (26) est en contact avec la partie formant dispositif d'arrêt (34), l'extrémité ouverte du tube à proximité de l'élément de renfort (27,27a) vient se placer dans une position qui coïncide avec ladite partie (39,39a) ayant une petite section transversale, l'élément de renfort (27, 27a) ayant été décalé par le tube (25) dans une position, dans laquelle il ne recouvre pas entièrement ladite partie (39, 39a) ayant une petite section transversale.

2. Ensemble selon la revendication 1, dans lequel ledit tube (25) et ledit arbre (26) engrènent réciproquement au moyen de cannelures (28,29).

3. Ensemble selon la revendication 1 ou 2, dans lequel ladite partie de limitation de déplacement a été formée par injection d'une résine (42) entre ledit arbre (26) et ledit tube (25) et durcissement de la résine.

4. Ensemble selon la revendication 1, 2 ou 3, dans lequel ladite partie (39) ayant une petite section transversale possède une section transversale circulaire, le diamètre de la partie ayant une petite section transversale étant compris entre 1/4 et 1/2 de celui de l'arbre, et la longueur de la partie ayant une petite section transversale étant égale au double ou plus du diamètre de la partie ayant une petite section transversale.

5. Ensemble selon la revendication 1, 2 ou 3, dans lequel ladite partie (39a) ayant une petite section transversale possède une section transversale en forme de croissant, qui est excentrée par rapport au centre de l'arbre.

6. Ensemble selon la revendication 1, 2 ou 3, dans lequel l'élément de renfort est un tube enveloppant (27,27a) possédant un bord d'extrémité pouvant engrener avec un bord d'extrémité du tube (25) au niveau de l'extrémité ouverte de ce dernier.

7. Ensemble selon la revendication 6, dans lequel l'un desdits bords d'extrémité est incliné par rapport à l'axe longitudinal de l'arbre (26).

FIG. 1

FIG. 2

FIG. 3

FIG. 4

FIG. 5

# FIG. 6A

# FIG. 6B

# FIG. 7

# FIG. 8

# FIG. 9

# FIG. 10

EP 0 683 084 B1

# FIG. 11

EP 0 683 084 B1

FIG. 12

FIG. 13

FIG.14

FIG. 15